# EUROPEAN PATENT APPLICATION

(11) **EP 4 122 316 A1**
(43) Date of publication of application: **25.01.2023**
(21) Application number: 21772154.7
(22) Date of filing: 18.03.2021
(51) Int. Cl.: A01G 18/69, A01G 7/00, A01K 1/00

(54) **WIND POWER DEVICE AND GROWING SYSTEM**

(30) Priority: 19.03.2020 JP 2020049453
(71) Applicant: Plants Laboratory, Inc., Minato-ku Tokyo 107-0062 (JP)
(72) Inventor: YUKAWA, Atsuyuki, Tokyo 107-0062 (JP)
(74) Representative: Uexküll & Stolberg
(86) International application number: PCT/JP2021/011221
(87) International publication number: WO 2021/187598

(57) **Abstract**

The present invention provides a wind power device capable of effectively suppressing the generation of an imbalance between air and carbon dioxide in a plurality of cultivation portions arranged along a specified direction, and a growing system provided with such a wind power device. The wind power device (100) of the present invention provides wind to objects cultivated in a plurality of cultivation portions (10) disposed along a specified direction (Dm), and the wind power device is provided with a movement unit (120) configured to be capable of reciprocally moving on a movement path (Am) along the specified direction (Dm) and capable of adjusting the period of the reciprocal movement; and at least one blower (131, 132) configured to move along with the movement unit (120).

## Description

### FIELD OF THE PRESENT INVENTION

The present invention relates to a wind power device and a growing system, in particular to a wind power device providing wind to objects cultivated in a plurality of cultivation portions disposed along a specified path, and a growing system provided with such a wind power device.

### BACKGROUND OF THE PRESENT INVENTION

In a case that plants such as vegetables and fungi such as mushrooms are cultivated indoors, an air conditioning device is always used to manage indoor temperature and humidity. Such an air conditioning device is disclosed in patent literature 1.

In addition, in a case that objects cultivated indoors are cultivated objects such as plants and fungi, they are usually shipped after the processes of sowing, seedling, planting, and harvesting, and a special rack (cultivation rack) is used during object cultivation including such processes.

However, there is a problem that an imbalance between air and carbon dioxide is generated in a plurality of cultivation racks arranged along a specified direction, which hinders the growth of cultivated objects.

### Literature in the Prior Art

### Patent Literature

Patent Literature 1: Japanese Patent Laid-Open Publication No. 7-312985.

### SUMMARY OF THE PRESENT INVENTION

### Problem to be solved in the present invention

The present invention aims at obtaining a wind power device capable of effectively suppressing the generation of an imbalance between air and carbon dioxide in a plurality of cultivation portions arranged along a specified direction, and a growing system provided with such a wind power device.

### Measurements adopted for solving problem

The present invention provides the following solutions.
Solution 1:
   A wind power device configured to provide wind to objects cultivated in a plurality of cultivation portions disposed along a specified direction, comprising:
   a movement unit configured to be capable of reciprocally moving on a movement path along the specified direction and capable of adjusting the period of the reciprocal movement; and
   at least one blower configured to move along with the movement unit.
Solution 2:
   The wind power device according to solution 1, wherein the movement path at least includes a first section and a second section, the at least one blower includes at least one first blower reciprocally moving in the first section and at least one second blower reciprocally moving in the second section, and
   the period of the reciprocal movement of the second blower is shorter than the period of the reciprocal movement of the first blower.
Solution 3:
   The wind power device according to solution 2, wherein the movement speed of the first blower is approximately equal to the movement speed of the second blower, and the distance of the first section is longer than the distance of the second section.
Solution 4:
   The wind power device according to solution 2, wherein the distance of the first section is approximately equal to the distance of the second section, and
   the movement speed of the second blower is higher than the movement speed of the first blower.
Solution 5:
   The wind power device according to any one of solutions 1 to 4, wherein the plurality of cultivation portions are arranged in a pair of columns, and
   the at least one blower is disposed between the pair of columns and includes a blower on one side providing wind to the cultivation portions in the column on one side, and a blower on the other side providing wind to the cultivation portions in the column on the other side.
Solution 6:
   The wind power device according to solution 5, wherein the blower on one side and the blower on the other side integrally move along with the movement unit.
Solution 7:
   The wind power device according to solution 5, wherein the movement unit is provided with a movement unit on one side and a movement unit on the other side,
   the blower on one side moves along with the movement unit on one side, and
   the blower on the other side moves along with the movement unit on the other side.
Solution 8:
   The wind power device according to solution 7, wherein the movement unit on one side and the movement unit on the other side move separately.
Solution 9:
   The wind power device according to any one of solutions 1 to 8, wherein each of the cultivation portions is provided with a movable cultivation rack, and the cultivation rack is provided with a plurality of cultivation shelves along the vertical direction.
Solution 10:
   The wind power device according to solution 9, wherein a plurality of blowers are disposed in the vertical direction in a manner of one-to-one correspondence to the cultivation shelves.
Solution 11:
   A growing system, comprising:
   a plurality of cultivation portions disposed along a specified direction; and
   the wind power device according to any one of solutions 1 to 10.
Solution 12:
   The growing system according to solution 11, wherein each of the cultivation portions is provided with a movable cultivation rack, and the cultivation rack is provided with a rack movement unit moving in the specified direction on the basis of cultivation states of cultivated objects.

### Effects of the present invention

According to the present invention, a wind power device capable of effectively suppressing the generation of an imbalance between air and carbon dioxide in a plurality of cultivation portions arranged along a specified direction, and a growing system provided with such a wind power device can be achieved.

### BRIEF DESCRIPTION OF THE DRAWINGS

Fig. 1 is a stereogram for illustrating a wind power device 100 and a growing system 1100 in embodiment 1 of the present invention and shows the appearance of the growing system 1100 provided with the wind power device 100 and a cultivation rack 10.
Fig. 2 is a planar view for illustrating the growing system 1100 as shown in Fig. 1, (a) in Fig. 2 shows a structure of the growing system 1100 observed in direction A in Fig. 1, and (b) in Fig. 2 shows a structure of the growing system 1100 observed in direction B in Fig. 1.
Fig. 3 is a stereogram for illustrating the wind power device 100 as shown in Fig. 1, (a) in Fig. 3 shows the wind power device 100 and a cultivation portion (the cultivation rack) 10, and (b) in Fig. 3 shows a cultivation container 1 shown as (a) in Fig. 3 in enlarged manner.
Fig. 4 is a stereogram for illustrating a variant (a wind power device 100a) of the wind power device 100 as shown in Fig. 1 and shows the wind power device 100a and the cultivation portion (the cultivation rack) 10.
Fig. 5 is a view schematically showing an example of a structure of a movement unit 120 of the wind power device 100 in Fig. 1.
Fig. 6 is a stereogram for illustrating a wind power device 200 and a growing system 1200 in embodiment 2 of the present invention and shows the appearance of the growing system 1200 provided with the wind power device 200 and a cultivation portion (cultivation rack) 10.
Fig. 7 is a planar view for illustrating the growing system 1200 as shown in Fig. 6, (a) in Fig. 7 shows a structure of the growing system 1200 observed in direction A in Fig. 6, and (b) in Fig. 7 shows a structure of the growing system 1200 observed in direction B in Fig. 6.
Fig. 8 is a stereogram for illustrating a wind power device 300 and a growing system 1300 in embodiment 3 of the present invention and shows the appearance of the growing system 1300 provided with the wind power device 300 and a cultivation portion (cultivation rack) 10.
Fig. 9 is a top view for illustrating the growing system 1300 as shown in Fig. 8 and shows a structure of the growing system 1300 observed in direction A in Fig. 8.
Fig. 10 is a side view for illustrating the growing system 1300 as shown in Fig. 8 and shows a structure of the growing system 1300 observed in direction B in Fig. 8.
Fig. 11 is a stereogram for illustrating a variant (a wind power device 300a) of the wind power device 300 as shown in Fig. 8 and a variant (a growing system 1300a) of the growing system 1300 as shown in Fig. 8.
Fig. 12 is a top view for illustrating the growing system 1300a as shown in Fig. 11 and shows a structure of the growing system 1300a observed in direction A in Fig. 11.
Fig. 13 is a side view for illustrating the growing system 1300a as shown in Fig. 11 and shows a structure of the growing system 1300a observed in direction B in Fig. 11.

### DESCRIPTION OF THE EMBODIMENTS

The problem to be solved by the present invention is to provide a wind power device capable of effectively suppressing the generation of an imbalance between air and carbon dioxide in a plurality of cultivation portions arranged along a specified direction, and a growing system provided with such a wind power device.

The above-mentioned problem is solved by providing the following wind power device configured to provide wind to objects cultivated in a plurality of cultivation portions disposed along a specified direction, comprising:
a movement unit configured to be capable of reciprocally moving on a movement path along the specified direction and capable of adjusting the period of the reciprocal movement; and
at least one blower configured to move along with the movement unit.

Therefore, as long as the wind power device of the present invention is provided with the movement unit capable of reciprocally moving on the movement path along the specified direction serving as an arrangement direction of the plurality of cultivation portions and the at least one blower moving along with the movement unit, and the movement unit is a part capable of adjusting the period of the reciprocal movement, other structures are not specifically limited and may be any structures. In addition, as long as the blowers are parts capable of generating wind provided to the objects cultivated in the cultivation portions, other structures are not specifically limited and may be in any forms.

The growing system of the present invention is a system provided with such a wind power device and a plurality of cultivation portions at the same time. As long as the cultivation portions may allow the wind to pass from the outside to the inside, other structures are not limited.

Below, the cultivation portions, the movement unit and the blowers will be described in detail.

### Objects

The objects may be any objects as long as they can be cultivated in the cultivation portions. For example, the objects may be animals such as pigs and chicken, or vegetables such as lettuce, rucola, cabbage, and Chinese cabbage, or fruits such as strawberries, or fungi (mushrooms, hypsizygus marmoreus, maitake), etc.

### Cultivation portions

The cultivation portions may be in any forms as long as they allow to-be-cultivated objects to be disposed. In a case that animals are cultivated, the cultivation portions may be simple spaces, may also be provided with cages for enclosing the animals, etc. In addition, in a case that the cultivated objects are plants, fruits, fungi, etc., the cultivation portions may also be provided with cultivation racks. Each of the cultivation racks is preferably provided with a plurality of cultivation shelves for placing containers (cultivation containers) storing the cultivated objects. In this case, a plurality of cultivation containers may be received in the cultivation rack. Preferably, a plurality of cultivation shelves are disposed in the vertical direction of the cultivation rack. By disposing the plurality of cultivation shelves in the vertical direction of the cultivation rack, disposing spaces for the cultivated objects (specifically, disposing spaces for the cultivation containers) may be guaranteed on the premise that the area occupied by the indoor cultivation rack is not increased.

In addition, the cultivation portions (cultivation racks, etc.) may be parts fixed to specified positions or movable parts. In addition, the movable cultivation portions are preferably parts moving on a movement path in a specified direction according to cultivation states of the objects. By using such cultivation portions (cultivation racks, etc.), the objects may be effectively sown until being harvested in a flowing operation.

### Arrangement of cultivation portions

The plurality of cultivation portions may be arranged in any manners as long as they are disposed in columns along the specified direction. For example, they may be in one column or a plurality of columns. For example, as an example of arrangement of the cultivation portions in the plurality of columns in the specified direction, the arrangement may be in two columns, and in this case, the arrangement of a pair between which the wind power device is sandwiched is preferred.

### Blower of wind power device

The blower of the wind power device may be of any structures as long as they may generate wind provided to the objects cultivated in the cultivation portions.

The blower may, for example, be a device provided with rotary fans and motors enabling the rotary fans to rotate and configured to provide wind generated due to the rotation of the rotary fans to the objects cultivated in the cultivation portions. Alternatively, the blower may also be a device provided with compressors and configured to take air compressed by the compressors as wind to be blown from nozzles to the objects cultivated in the cultivation portions. The blower may be a fan for providing air on a large scale or a circulator capable of providing the wind to be far to a certain extent.

The number of the blower is not specifically limited, may be one, and may also be two or more. In addition, in a case that the cultivation portions are provided with the cultivation racks and each of the cultivation racks is provided with a plurality of cultivation shelves, each of the cultivation shelves in the cultivation rack may be provided with one of the blowers in a manner of one-to-one correspondence, or a specified number (for example, two) of vertically or horizontally adjacent cultivation shelves are provided with one blower. The number of the cultivation shelves vertically or horizontally adjacent to one of the blowers is not limited to be two and may also be three or more. By disposing the cultivation shelves in the cultivation rack in the manner of one-to-one correspondence, wind conforming to the state of each of the objects may be provided.

Further, in a case that a plurality of cultivation portions are arranged in a pair of columns along the specified direction, the wind power device may be disposed between the pair of columns and includes a blower on one side providing wind to the cultivation portions in the column on one side, and a blower on the other side providing wind to the cultivation portions in the column on the other side.

### Movement unit of wind power device

The movement unit of the wind power device may be of any structure as long as it is capable of reciprocally moving on the movement path along the specified direction serving as the arrangement direction of the cultivation portions and capable of adjusting the period of the reciprocal movement. Adjusting the period refers to adjusting the frequency of blowing wind to each of the objects. For example, if the period is prolonged, the frequency of blowing wind to each of the objects is increased; and if the period is shortened, the frequency of blowing wind to each of the objects is reduced. In an embodiment, the frequency of blowing wind to the objects is about 60 second/time or more.

The movement unit may be any manner. For example, it may be provided with a driving wheel and a power source (e.g., a motor) enabling the driving wheel to rotate and may include a trolley traveling while carrying the blower. In this case, the trolley is equipped with at least one blower. In addition, the movement unit may also be disposed on a ceiling to enable the blower to move like a monorail type.

This trolley may be further provided with a steering wheel and a sensor for detecting a cable (electric wire, etc.) disposed along the specified direction (the arrangement direction of the cultivation portions). The steering wheel is controlled on the basis of the detection output of the sensor, and therefore, the trolley moves along the specified direction. The sensor may also be an image sensor for detecting the arranged cultivation portions themselves, and Fin this case, the cable disposed along the specified direction is not detected. In this case, the trolley is provided with a steering control device which controls the steering wheel on the basis of images of the cultivation portions detected by the sensor so that the trolley moves along the arrangement direction of the cultivation portions.

Alternatively, instead of the above-mentioned trolley, the movement unit may also be provided with a sliding component sliding along a guide component (e.g., guide rail and guide slot, etc.) disposed along the specified direction. In a case that the movement unit moves along the guide component, the sliding component may, for example, be the following component: the sliding component is provided with a permanent magnet or an electromagnet and is configured to move on the guide component under the action of a linear motor formed from the permanent magnet or the electromagnet of the sliding component and an electromagnet of the guide component. In addition, the sliding component may further be a component provided with a driving wheel and a motor and may be configured to move along the specified direction (the arrangement direction of the cultivation portions) under the guide of the guide component.

Alternatively, the sliding component may also be the following component: the sliding component is connected to a chain wound on sprockets rotatably disposed on two ends of the guide component or a belt wound on pulleys rotatably disposed on two ends of the guide component, and is guided by the guide component under the rotation of the sprockets or the pulleys so as to move along the specified direction. In this case, a motor enabling the sprockets or the pulleys to rotate is disposed on at least one of two ends of the guide component.

Alternatively, it is also possible that two ends of the guide component are respectively provided with electric liers for winding wires, the wire of the electric lier from one end side of the guide component is connected to one end side of the sliding component, and the wire of the electric lier from the other end side of the guide component is connected to the other end side of the sliding component. By winding the wires using the respective electric liers, the sliding component is enabled to reciprocally move.

In addition, in the wind power device, a structure enabling a movement direction to reverse for the reciprocal movement of the sliding component may also be any structure.

In the aspect of the reciprocal movement of the sliding component, for example, when the sliding component comes to the end of the movement path, the movement direction of the sliding component is enabled to reverse; for example, contactless switches or proximity switches are disposed on two ends of the movement path, and when it is detected, by using these switches, that the sliding component is close to the end of the movement path or that the sliding component reaches the end of the movement path, the movement direction of the sliding component is enabled to reverse.

Further, in the wind power device provided by the present invention, as long as the blowers are movable, structures enabling the blowers to move are not specifically limited. For example, in the wind power device, the movement unit enabling the blowers to move may be disposed to be separated from the blowers as above, and the blowers may also be of structures internally provided with movement units and capable of self-walking.

### Movement path of movement unit of wind power device

The movement path of the movement unit of the wind power device may be in any form as long as it is provided with one or more sections. For example, it may include one section for reciprocal movement of the blowers and may also be segmented into a plurality of sections. In an embodiment, the movement path includes a first section and a second section.

In this case, at least one blower of the wind power device is preferably provided with at least one first blower reciprocally moving in the first section and at least one second blower reciprocally moving in the second section.

In addition, the number of the first blower reciprocally moving in the first section may be one or more, and the number of the second blower reciprocally moving in the first section may be one or more.

In addition, the reciprocation period of the blowers in the first section and the second section may be adjusted in any manner. For example, the adjustment for the period may be achieved by changing the movement speeds of the first blower and the second blower, or by changing the lengths of the first section and the second section.

For example, the period of the reciprocal movement of the second blower is shorter than the period of the reciprocal movement of the first blower. In this case, for example, it is possible that the movement speed of the first blower is approximately equal to the movement speed of the second blower, and the distance of the first section is longer than the distance of the second section; or it is also possible that the distance of the first section is approximately equal to the distance of the second section, and the movement speed of the second blower are higher than the movement speed of the first blower.

However, the period of the reciprocal movement of the second blower may be the same as the period of the reciprocal movement of the first blower. In this case, it is possible that the movement speed of the first blower is approximately equal to the movement speed of the second blower, and the distance of the first section is approximately equal to the distance of the second section; or it is also possible that the distance of the first section is longer than the distance of the second section, and the movement speed of the first blower is higher than the movement speed of the second blower; or it is further possible that the distance of the second section is longer than the distance of the first section, and the movement speed of the second blower is higher than the movement speed of the first blower.

Therefore, the frequency of blowing wind to the objects from the upstream and downstream sides of the movement path for the cultivation portions to move may be changed by changing the reciprocation period of the first blower in the first section and the reciprocation period of the second blower in the second section, and then, wind may be provided for the objects in the cultivation portions at a frequency corresponding to the growth of the objects in the cultivation portions.

For example, the first section is set as a section on the upstream side of the movement path, the second section is set as a section on the downstream side of the movement path, and the reciprocation period of the second blower in the second section on the downstream side is set to be shorter than the reciprocation period of the first blower in the first section on the upstream side, and thus, the frequency of blowing wind to the objects on the downstream side may be increased while the frequency of blowing wind to the objects on the upstream side is suppressed. Therefore, for example, in a case that the objects are plants and fruits, the plants located in the cultivation portions in the section on the upstream side are at a stage when photosynthesis is not performed after sowing, and therefore, near the plants, less carbon dioxide is absorbed, and less oxygen is emitted. Therefore, there is a small change in volumes of air and carbon dioxide. Therefore, power consumption caused by unnecessary air exchange may be avoided by reducing the frequency of blowing wind. Oppositely, the plants located in the section on the downstream side are at a stage when the photosynthesis of the plants is vigorous after a period of time since sowing is completed, and therefore, near the plants, the decrement of carbon dioxide is increased, and the emission of oxygen is increased. As a result, there is a greater imbalance between the volume of air and the volume of carbon dioxide. Therefore, oxygen contained in the wind may be provided by increasing the frequency of blowing wind, and thus, the imbalance between the volume of air and the volume of carbon dioxide near the plants may be reduced. As a result, the air exchange efficiency may be increased.

For example, in a case that the objects are animals, the animals in the cultivation portions in the section of the upstream side are still young and are low in respiratory capacity and physical activity, and therefore, less oxygen is absorbed, less carbon dioxide is emitted, and less heat is radiated to the outside during movement. Therefore, there is a small change in volumes of air and carbon dioxide, and there is a small imbalance between air and carbon dioxide. In addition, there is also a small change in temperatures in the cultivation portions. Therefore, power consumption caused by unnecessary air exchange may be avoided by reducing the frequency of blowing wind. Oppositely, the animals located in the section on the downstream side sufficiently grow and are high in respiratory capacity and activity, and therefore, the absorption of oxygen is increased, the emission of carbon dioxide and heat radiated to the outside are increased. As a result, there is a greater imbalance between the volume of air and the volume of carbon dioxide, and there is a greater change in temperatures in the cultivation portions. Therefore, carbon dioxide contained in the wind may be reduced by increasing the frequency of blowing wind, and thus, the imbalance between the volume of air and the volume of carbon dioxide may be reduced. In addition, the temperatures in the cultivation portions in which the temperatures have been raised may be lowered by blowing wind. As a result, the air exchange efficiency may be increased. In addition, with respect to temperature adjustment, the situations of the animals are remarkably described, however, an effect of temperature adjustment may also be achieved for cultivated objects such as plants and fungi.

For example, in a case that the objects are fungi such as mushrooms, the fungi located in the cultivation portions in the section on the upstream side are low in respiratory capacity after being sown, and therefore, near the fungi, less oxygen is absorbed, and less carbon dioxide is emitted. Therefore, there is a small change in volumes of air and carbon dioxide, and there is a small imbalance between air and carbon dioxide. Therefore, power consumption caused by unnecessary air exchange may be avoided by reducing the frequency of blowing wind. Oppositely, the fungi located in the section on the downstream side are high in respiratory capacity after a period of time since sowing ins completed, and therefore, the absorption of oxygen is increased, and the emission of carbon dioxide is increased. As a result, there is a greater imbalance between the volume of air and the volume of carbon dioxide near the fungi. Therefore, carbon dioxide contained in the wind may be provided by increasing the frequency of blowing wind, and thus, the imbalance between the volume of air and the volume of carbon dioxide near the fungi may be reduced. As a result, the air exchange efficiency may be increased.

Specifically, for example, the movement speed of the first blower is set to be approximately equal to the movement speed of the second blower, the distance from a starting point to an ending point of the first section on the upstream side is set to be longer than the distance from a starting point to an ending point of the second section on the downstream side, and thus, the reciprocation period of the second blower in the second section on the downstream side may be shorter than the reciprocation period of the first blower in the first section on the upstream side.

In addition, the distance from the starting point to the ending point of the first section on the upstream side is set to be approximately equal to the distance from the starting point to the ending point of the second section on the downstream side, the movement speed of the second blower is set to be higher than the movement speed of the first blower, and thus, the reciprocation period of the second blower in the second section on the downstream side may be shorter than the reciprocation period of the first blower in the first section on the upstream side.

Further, as mentioned above, in a case that the at least one blower is provided with a blower on one side providing wind to the cultivation portions in the column on one side, and a blower on the other side providing wind to the cultivation portions in the column on the other side, the blower on one side and the blower on the other side may integrally move along with the movement unit. Alternatively, in a case that the at least one blower is provided with the blower on one side and the blower on the other side, the movement unit may be provided with a movement unit on one side and a movement unit on the other side, the blower on one side moves along with the movement unit on one side, and the blower on the other side move along with the movement unit on the other side.

Further, in a case that the movement unit is provided with the movement unit on one side and the movement unit on the other side, the movement unit on one side and the movement unit on the other side may move separately. However, the movement unit on one side and the movement unit on the other side may also be linked to move.

However, in the following embodiments 1 to 3, as described below, as an embodiment of the wind power device, a device provided with a movement unit equipped with blowers and a guide rail for guiding the movement of the movement unit is illustrated as an example. A case that the cultivated objects are plants and the cultivation portions are provided with cultivation racks is described, but the present invention is not limited thereto.

A wind power device in embodiment 1 is a device provided with a movement unit equipped with two blowers, wherein the movement unit reciprocally moves on an arrangement direction in which a plurality of cultivation portions are disposed in a column along a specified direction.

A wind power device in a variant of embodiment 1 is a device provided with a movement unit equipped with four blowers respectively corresponding to four cultivation shelves of a cultivation rack to replace the movement unit equipped with the two blowers in the wind power device in embodiment 1.

A wind power device in embodiment 2 is a device provided with two independent movement units respectively equipped with two blowers, wherein one of the two movement units reciprocally moves in a first section included in a movement path, and the other one of the two movement units reciprocally moves in a second section included in the movement path.

A wind power device in embodiment 3 is a device provided with a movement unit reciprocally moving, along a movement path, between a pair of columns of cultivation portions (provided with movable cultivation racks) arranged in two columns, wherein the movement unit is equipped with four blowers, two of the blowers are used to provide wind to the cultivation portions (the cultivation racks) in the column on one side, and the two remaining blowers are used to provide wind to the cultivation portions (the cultivation racks) in the column on the other side.

A wind power device in a variant of embodiment 3 is a device provided with two movements units reciprocally moving independently to replace the one movement unit of the wind power device in embodiment 3, wherein each of the two movement units is provided with two blowers, the two blowers of the movement unit on one side are used to provide wind to the cultivation portions (cultivation racks) in the column on one side, and the two blowers of the movement unit on the other side are used to provide wind to the cultivation portions (cultivation racks) in the column on the other side.

Below, the embodiments of the present invention will be described with reference to the accompanying drawings.

### Embodiment 1

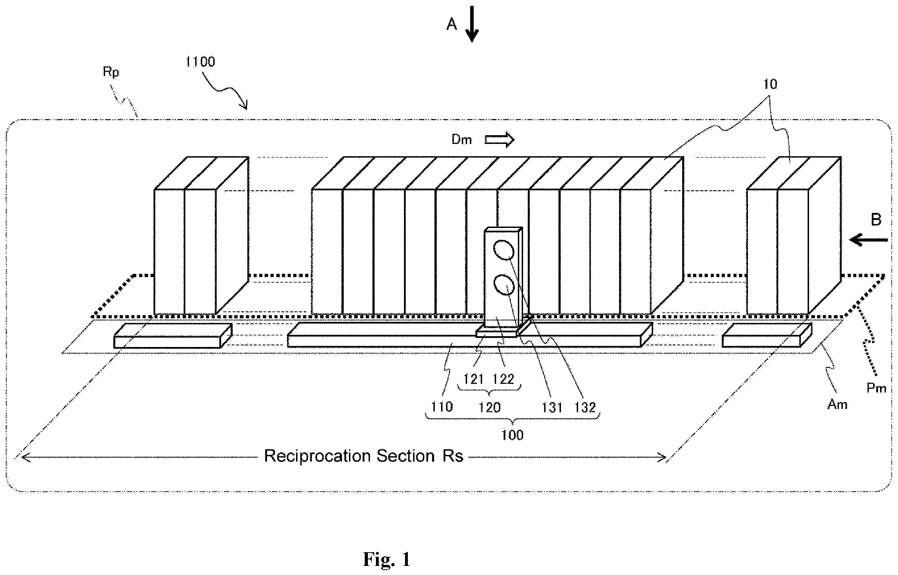

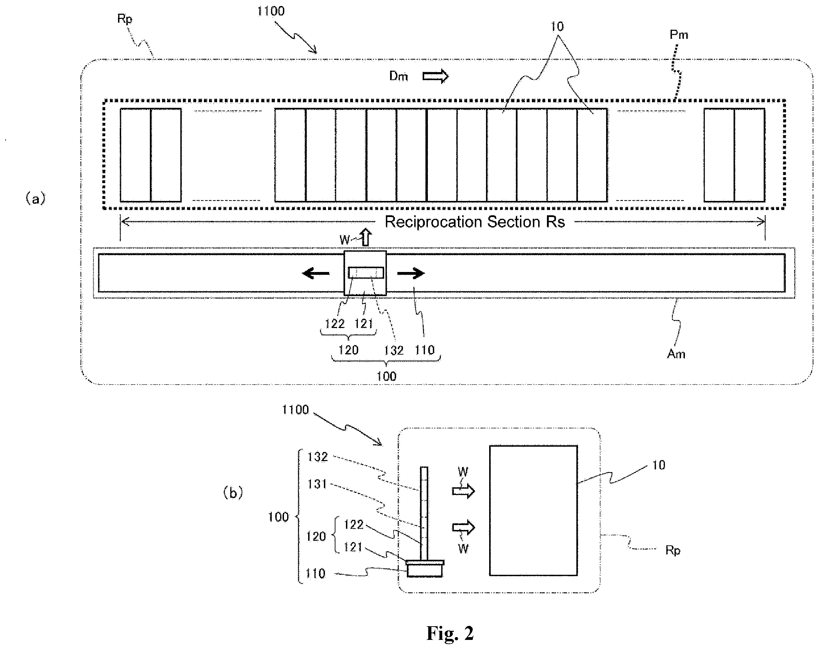

Fig. 1 and Fig. 2 are respectively used for illustrating a wind power device 100 and a growing system 1100 in embodiment 1 of the present invention. Fig. 1 shows the appearance of the growing system 1100 provided with the wind power device 100, (a) in Fig. 2 shows a structure of the growing system 1100 observed in direction A in Fig. 1, and (b) in Fig. 2 shows a structure of the growing system 1100 observed in direction B in Fig. 1.

The wind power device 100 in embodiment 1 is a wind power device providing wind to objects cultivated in a plurality of cultivation portions (cultivation racks) 10. The plurality of cultivation portions (cultivation racks) 10 are disposed in an indoor growing region (e.g., a region in a workshop of a cultivation factory) Rp along a specified direction Dm. This growing region Rp is internally provided with a movement path (rack movement path) Pm for the plurality of cultivation portions (cultivation racks) 10 disposed along the specified direction Dm to move.

The wind power device 100 is provided with a movement unit 120 capable of reciprocally moving and two blowers 131 and 132 configured to move along with the movement unit 120, and the growing region Rp is internally provided with a blower movement path Am for the movement unit 120 and the two blowers 131 and 132 to reciprocally move together along the specified direction Dm. The movement unit 120 is configured to be capable of adjusting the period of the reciprocal movement on the blower movement path Am.

Below, specific structures of the cultivation racks 10, the movement unit 120 and the blowers 131 and 132 will be described.

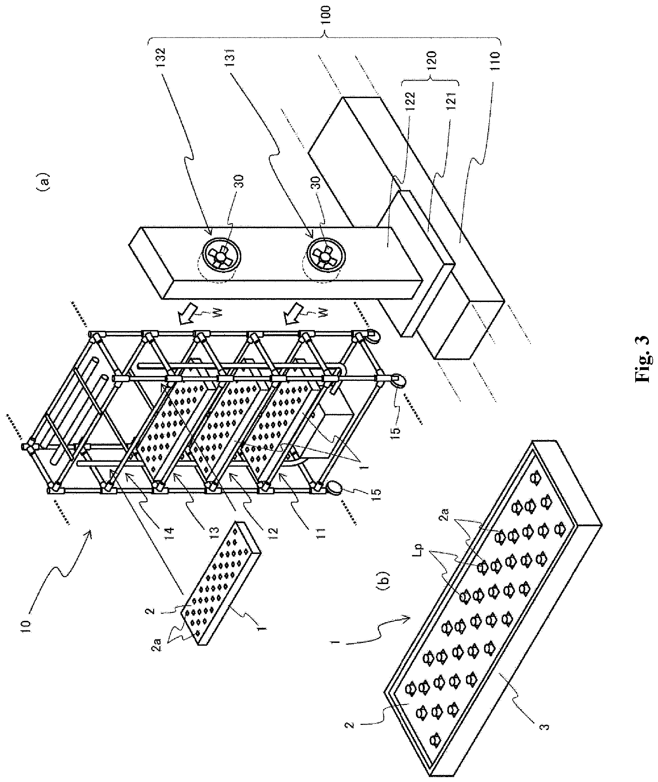

Fig. 3 is a stereogram for illustrating the wind power device 100 as shown in Fig. 1, (a) in Fig. 3 shows the wind power device 100 and a cultivation rack 10, and (b) in Fig. 3 shows a cultivation container 1 shown as (a) in Fig. 3 in enlarged manner.

The wind power device 100 is further provided with a guide rail 110 disposed on the blower movement path Am. The movement unit 120 is provided with a sliding component 121 configured to be capable of sliding, relative to the guide rail 110, on the guide rail 110 and a supporting component 122 fixed to the sliding component 121. The supporting component 122 is equipped with two blowers 131 and 132 arranged up and down, and wind generated by the two blowers 131 and 132 is provided to objects received in a cultivation rack 10 moving on the rack movement path Pm.

The wind power device 100 is not necessarily provided with the guide rail 110. In the wind power device 100, the movement unit 120 is only required to be capable of reciprocally moving along the blower movement path Am. For example, it is also possible that the movement unit 120 reciprocally moves on the blower movement path Am in order to detect a cable such as an electric wire laid along the blower movement path Am. In this case, it is also possible that any one of wheels 21 and 22 of the movement unit 120 functions as a steering wheel, and a control portion 25 operates the steering wheel to enable the movement unit 120 to move along the blower movement path Am.

Further, structures of the two blowers 131 and 132 are not limited, however, the blowers 131 and 132 described herein are of the same type of blowers provided with rotary fans 30 and driving motors (not shown) enabling the fans 30 to rotate. However, the blowers 131 and 132 are not limited to the use of fans, but can also blow the air compressed by a compressor from nozzles. In addition, the blowers 131 and 132 may also be of different types of blowers which may be different in air volume and air speed generated within a unit time.

In addition, as shown in (a) in Fig. 3, the cultivation rack 10 is provided with four cultivation shelves 11 to 14 for placing cultivation containers 1 for cultivating objects Lp, the blower 131 on the lower side of the wind power device 100 provides wind W to the objects Lp in the cultivation containers 1 placed on the cultivation shelves 11 and 12 on the two lower layers of the cultivation rack 10, and the blower 132 on the upper side of the wind power device 100 provides wind W to the objects Lp in the cultivation containers 1 placed on the cultivation shelves 13 and 14 on the two upper layers of the cultivation rack 10. Further, the bottom of this cultivation rack 10 is equipped with casters 15 for movement, and this cultivation rack 10 is of a structure manually pushed by operating personnel. However, the cultivation rack 10 may also be a device provided with electric driving wheels to replace the casters for movement, wherein once the cultivation rack 10 is guided into the rack movement path Pm, the cultivation rack 10 moves from a starting point to an ending point on the movement path Pm under the intermittent drive of the electric driving wheels.

In addition, as shown in (b) in Fig. 3, each of the cultivation containers 1 is provided with a cultivation palette 2 and a cultivation tray 3, wherein the cultivation palette 2 is provided with receiving recesses 2a for receiving seeds and seedlings as the objects, the cultivation tray 3 is used for storing a nutrient solution supplied to plants in the cultivation palette 2, and the cultivation palette 2 is configured to be detachable with respect to the cultivation tray 3.

The number of the blowers 131 and 132 equipped on the supporting component 122 of the movement unit 120 is not limited to two, and it may be one, three or more.

For example, in the wind power device 100, the blowers may be disposed for each of the cultivation shelves of the cultivation rack 10 provided with the plurality of cultivation shelves.

### Variant of embodiment 1

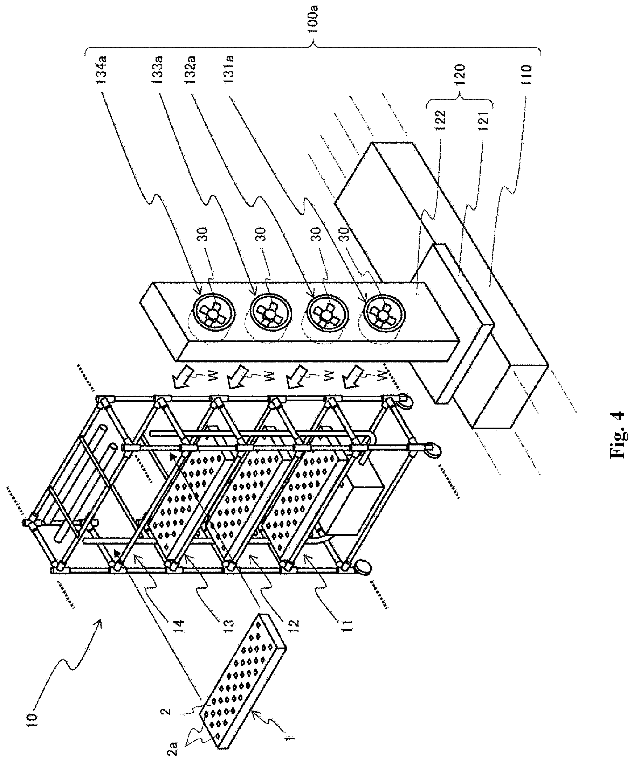

Fig. 4 is a stereogram for illustrating a variant (wind power device 100a) of the wind power device 100 as shown in Fig. 1 and shows the wind power device 100a and the cultivation rack 10.

The wind power device 100a as shown in Fig. 4 is provided with four blowers 131a, 132a, 133a and 134a, and other structures are the same as the structures of the wind power device 100 as shown in Fig. 3.

Specifically, in this wind power device 100a, the four blowers 131a to 134a are equipped on the supporting component 122 of the movement unit 120 in a vertical direction so as to be in one-to-one correspondence to each of the four cultivation shelves 11 to 14 of the cultivation rack 10.

In the wind power device 100a having such a structure, the four blowers 131a to 134a sequentially disposed on the supporting component 122 from the bottom respectively provide wind to objects Lp in cultivation containers 1 placed on the four cultivation shelves 11 to 14 on the first layer to the fourth layer of the cultivation rack 10, thereby effectively providing the wind W to the objects in the cultivation containers 1 placed on all the cultivation shelves of the cultivation rack 10 provided with the four layers of cultivation shelves 11 to 14.

In addition, the specific structure of the movement unit 120 of the wind power device 100 in embodiment 1 or the wind power device 100a in the variant of embodiment 1 is not specifically limited, and an example of the specific structure will be described below.

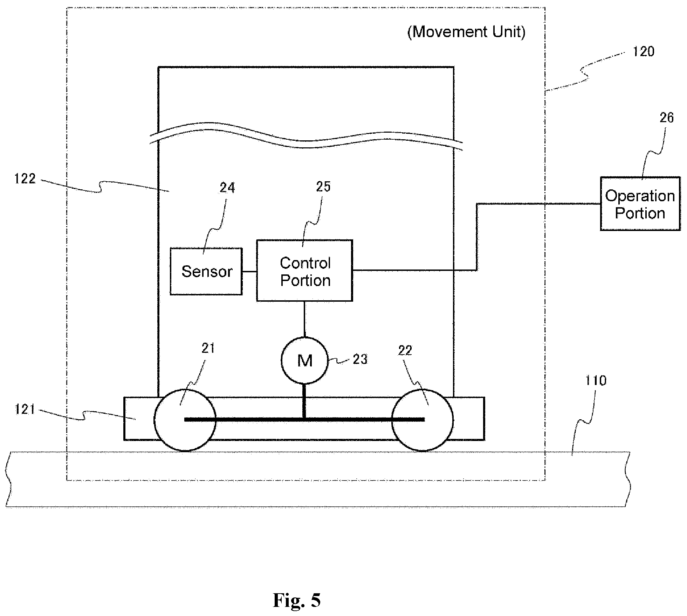

Fig. 5 is a view schematically showing an example of a structure of the movement unit 120 of the wind power device 100 in Fig. 1.

The movement unit 120 is provided with a sliding component 121 slidably equipped on a guide rail 110, a pair of wheels 21 and 22 equipped on the sliding component 121, a driving motor 23 used to rotate the wheels 21 and 22, a sensor 24 detecting the end (the end of the guide rail 110) of the blower movement path Am to output an end detection signal, and a control portion 25 used to control the driving motor 23. The driving motor 23, the sensor 24 and the control portion 25 are, for example, carried on a supporting component 122. However, the driving motor 23, the sensor 24 and the control portion 25 may be, for example, carried on the sliding component 121. The control portion 25 is configured to receive an operation signal from an operation portion 26, disposed outside the movement unit 120, of the wind power device 100. The operation portion 26 may be disposed on the sliding component 121 or the supporting component 122 of the movement unit 120.

Further, if a power switch (not shown) in the operation portion 26 of the wind power device 100 is turned on, the control portion 25 works as follows: the wheels 21 and 22 are enabled to rotate along a specified direction under the rotation of the driving motor 23 so that the sliding component 121 moves along the guide rail 110, and when the sliding component 121 is close to any end of the blower movement path Am, the motor 23 is enabled to reversely rotate on the basis of the end detection signal from the sensor 24. Further, the control portion 25 is configured to be capable of adjusting the rotation speed of the motor 23 according to the operation signal from the operation portion 26 of the wind power device 100. In addition, power is supplied to the driving motor 23 from the outside of the movement unit 120 via a power cable, etc. However, the power source of the driving motor 23 may also be a battery built in the movement unit 120.

Next, the effect of the growing system 1100 provided with the wind power device 100 in embodiment 1 will be described.

In the growing system 1100 provided with the wind power device 100 having such a structure, if the cultivation racks 10 provided with the cultivation shelves 11 to 14 receiving the cultivation containers 1 in which seeds of the objects (e.g., plants, fruits, and fungi) are sown are sequentially guided into a growing region (e.g., a workshop of a cultivation factory) Rp, the cultivation racks 10 are arranged on the rack movement path Pm along the specified direction Dm. With respect to the plurality of cultivation racks 10 arranged on the rack movement path Pm, for example, operating personnel manually move the cultivation racks 10 for a specified distance on the rack movement path Pm every other specified time, and thus, the cultivation racks 10 move from the starting point to the ending point of the rack movement path Pm. In addition, in a case that each of the cultivation rack 10 is provided with the electric driving wheels to replace the castors 15 for movement, as mentioned above, once the cultivation rack 10 is guided into the rack movement path Pm, the cultivation rack 10 moves from the starting point to the ending point on the movement path Pm under the intermittent drive of the electric driving wheels.

Therefore, when the cultivation racks 10 move from the starting point to the ending point on the rack movement path Pm, the movement unit 120 of the wind power device 100 reciprocally moves on the guide rail 110. Under the action of the reciprocal movement of this movement unit 120, the two blowers 131 and 132 equipped on supporting component 122 of the movement unit 120 also reciprocally move in a whole reciprocation section Rs of the blower movement path Am.

Therefore, the wind W from the two blowers 131 and the 132 equipped on the movement unit 120 is provided to the inside of the plurality of cultivation racks 10 moving on the rack movement path Pm, and thus, air exchange is performed on ambient air surrounding the objects Lp in the cultivation containers 1 placed on all the cultivation shelves 11 of each of the cultivation racks 10.

In addition, in the movement unit 120, the rotation speed of the driving motor 23 is adjusted as required according to the operation signal from the operation portion 26 of the wind power device 100, the movement unit 120 reciprocally moves in the reciprocation section Rs of the blower movement path Am at a suitable speed, and thus, the period of reciprocal movement becomes the optimal period.

Therefore, air exchange in the cultivation racks 10 may be effectively performed according to the growth conditions of the objects Lp received in all the cultivation shelves 11 of the cultivation racks 10, e.g., according to the photosynthesis and respiratory volumes of the objects in the cultivation racks 10.

As a result, a wind power device capable of effectively suppressing the generation of an imbalance between air and carbon dioxide in a plurality of cultivation racks arranged along a specified direction, and a growing system provided with such a wind power device.

In addition, the above-mentioned wind power device 100 in embodiment 1 shows a case that the blower movement path Am only include one reciprocation section Rs. However, the blower movement path may also include two or more reciprocation sections, and in embodiment 2 described hereinafter, a case that the blower movement path Am includes two reciprocation sections Rs1 and Rs2 will be described.

### Embodiment 2

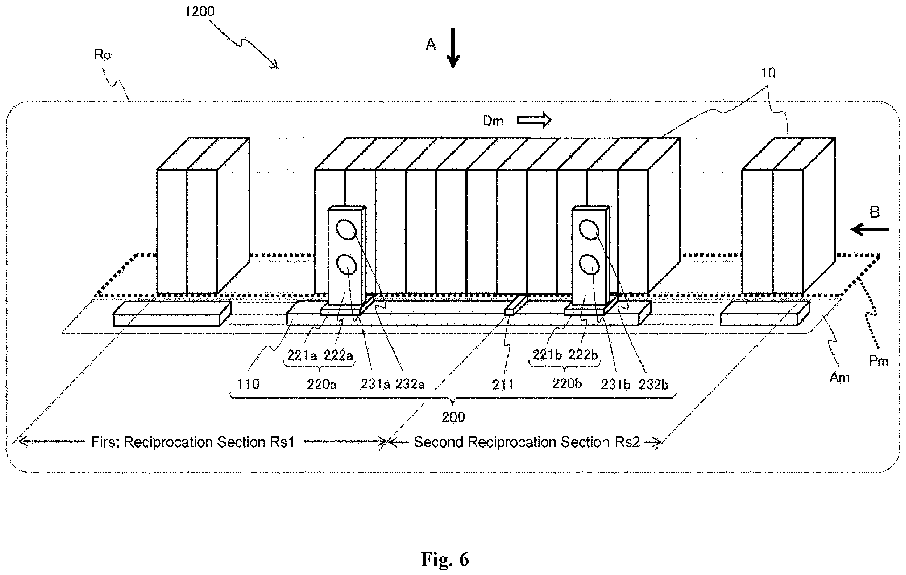

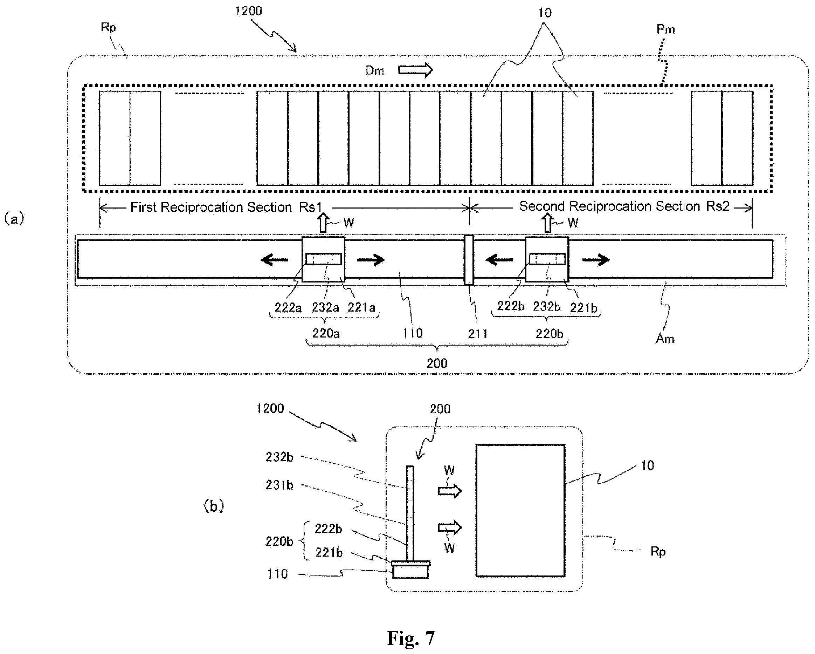

Fig. 6 and Fig. 7 are respectively used for illustrating a wind power device 200 and a growing system 1200 in embodiment 2 of the present invention. Fig. 6 shows the appearance of the growing system 1200 provided with the wind power device 200, (a) in Fig. 7 shows a structure of the growing system 1200 observed in direction A in Fig. 6, and (b) in Fig. 7 shows a structure of the growing system 1200 observed in direction B in Fig. 6.

In this wind power device 200 in embodiment 2, the blower movement path Am provided with the one reciprocation section Rs in the wind power device 100 in embodiment 1 is modified to a blower movement path Am including two reciprocation sections (i.e., a first reciprocation section Rs1 and a second reciprocation section Rs2). This wind power device 200 is provided with a first movement unit 220a reciprocally moving in the first reciprocation section Rs1 and a second movement unit 220a reciprocally moving in the second reciprocation section Rs2 to replace the one movement unit 120 in embodiment 1.

In this wind power device 200, a movement limiting member 211 for limiting the movement of the first movement unit 220a and the second movement unit 220b is disposed in the middle portion of the guide rail 110, and the guide rail 110 is divided into the first reciprocation section Rs1 and the second reciprocation section Rs2 by the movement limiting member 211. The first reciprocation section Rs1 is longer than the second reciprocation section Rs2, and the movement speed of the first movement unit 220a and the movement speed of the second movement unit 220b are adjusted to be constant speeds which are approximately the same. As a result, the reciprocation period of the first movement unit 220a in the first reciprocation section Rs1 is longer than the reciprocation period of the second movement unit 220b in the second reciprocation section Rs2. The reason is that: compared with that in the cultivation rack 10 moving in the rack movement path Pm and equivalent to the portion on the downstream side of the second reciprocation section Rs2, the photosynthesis accompanying with the consumption of carbon dioxide and the emission of oxygen or the respiratory capacity accompanying with the emission of carbon dioxide and the consumption of oxygen is less in the cultivation rack 10 moving in the rack movement path Pm and equivalent to the portion on the upstream side of the first reciprocation section Rs1.

In addition, the length of the first reciprocation section Rs1 may also be approximately equal to the length of the second reciprocation section Rs2. In this case, the movement speed of the second movement unit 220b is adjusted to be higher than the movement speed of the first movement unit 220a, and thus, the reciprocation period of the first movement unit 220a in the first reciprocation section Rs1 may be longer than the reciprocation period of the second movement unit 220b in the second reciprocation section Rs2.

The first movement unit 220a is provided with a sliding component 221a reciprocally moving in the first reciprocation section Rs1 of the guide rail 110 and a supporting component 222a fixed to the sliding component 221a, and the supporting component 222a is equipped with two blowers 231a and 232a in a vertical direction. Similar to the first movement unit 220a, the second movement unit 220b is also provided with a sliding component 221b and a supporting component 222b, and the supporting component 222b is equipped with two blowers 231b and 232b in a vertical direction. In addition, each of the first movement unit 220a and the second movement unit 220b is provided with components equivalent to the wheels 21 and 22, the driving motor 23, the sensor 24 and the control portion 25 of the movement unit 120 in embodiment 1. The control portion of each of the movement units 220a and 220b is configured to receive an operation signal from an operation portion 26 of the wind power device 200.

Similar to the growing system 1100 in embodiment 1, in the growing system 1200 provided with the wind power device 200 having such a structure in embodiment 2, when the cultivation racks 10 move from a starting point to an ending point on the rack movement path Pm, the two movement units 220a and 220b of the wind power device 200 move on the guide rail 110.

However, in this growing system 1200 in embodiment 2, the first movement unit 220a only reciprocally moves in the first reciprocation section Rs1 of the guide rail 110 disposed on the blower movement path Am, and the second movement unit 220a only reciprocally moves in the second reciprocation section Rs2 of the guide rail 110 disposed on the blower movement path Am.

The movement speed of the first movement unit 220a is the same as the movement speed of the second movement unit 220b. However, the first reciprocation section Rs1 for the first movement unit 220a to reciprocate is longer than the second reciprocation section Rs2 for the second movement unit 220b to reciprocate, and therefore, compared with the portion (the second reciprocation section Rs2) in the blower movement path Am corresponding to the downstream side of the rack movement path Pm, in the portion (the first reciprocation section Rs1) in the blower movement path Am corresponding to the upstream side of the rack movement path Pm, the frequency that the blowers pass through is lower.

Therefore, in a case that the objects are cultivated while the plurality of cultivation racks 10 sequentially move in the growing region at the same time, air exchange for the cultivation racks 10 may be effectively performed according to the growth stages of the objects.

In addition, in the above-mentioned growing systems 1100 and 1200 in embodiments 1 and 2, a case that the plurality of cultivation racks 10 are arranged in a column in the growing region Rp to move on the rack movement path Pm is shown. However, in the growing systems, the plurality of cultivation racks 10 may also be arranged in a plurality of columns to move on the rack movement path Pm, and in embodiment 3 described hereinafter, a growing system in which a plurality of cultivation racks 10 are arranged in two columns to move on the rack movement path Pm and a wind power device used in such a growing system will be described.

### Embodiment 3

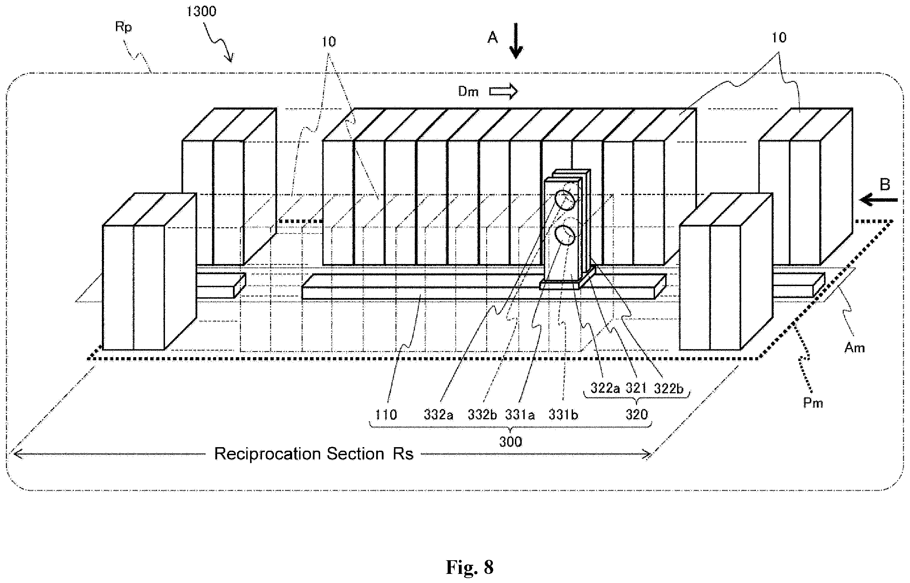

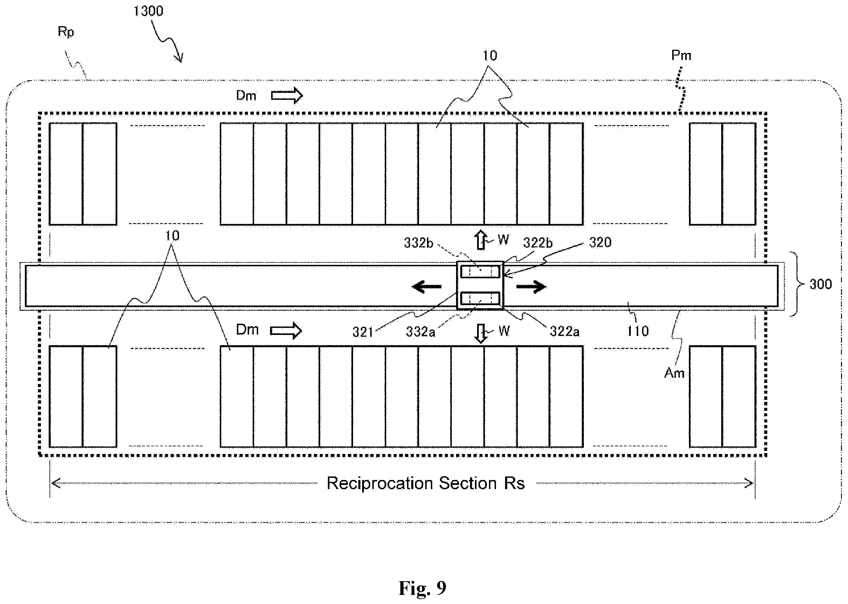

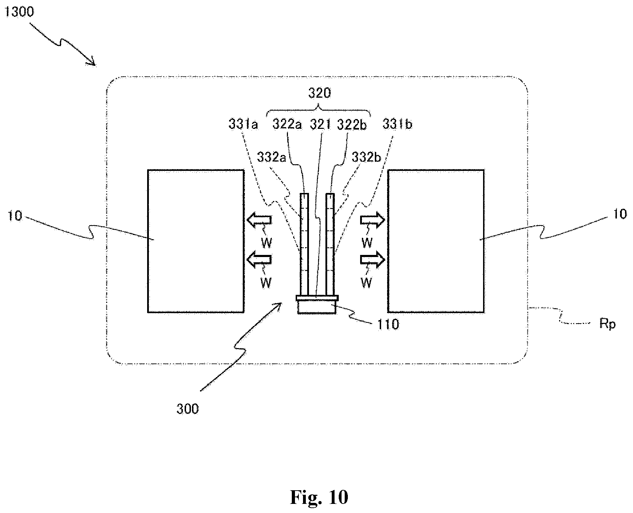

Fig. 8 to Fig. 10 are respectively used for illustrating a wind power device 300 and a growing system 1300 in embodiment 3 of the present invention. Fig. 8 shows the appearance of the growing system 1300 provided with the wind power device 300, Fig. 9 shows a structure of the growing system 1300 observed in direction A in Fig. 8, and Fig. 10 shows a structure of the growing system 1300 observed in direction B in Fig. 8.

In this wind power device 300 in embodiment 3, the structure of the wind power device 100 only blowing the wind W to one side of the blower movement path Am in embodiment 1 is modified to a structure that the wind W is blown to two sides of the blower movement path Am. As shown in Fig. 8 to Fig. 10, the wind power device 300 having such a structure is used in the growing system 1300 in which a plurality of cultivation racks 10 are arranged in two columns in a growing region Rp to move on a rack movement path Pm.

That is, the growing system 1300 in which this wind power device 300 is used is configured in a manner that the cultivation racks 10 are arranged in two columns to move on the rack movement path Pm, and the wind power device 300 is configured to reciprocally move on the blower movement path Am set between a pair of columns of cultivation racks 10 arranged in two columns.

Below, a structure of the wind power device 300 will be described in detail.

The wind power device 300 is provided with a guide rail 110, a movement unit 320 moving on the guide rail 110, and four blowers 331a, 332a, 331b and 332b moving under the action of the movement unit 320.

The guide rail 10 is disposed on a blower movement path Am between the columns of the pair of cultivation racks 10 arranged in two columns to move on the rack movement path Pm, and the movement unit 320 may reciprocally move in the whole blower movement path Am.

The movement unit 320 is provided with a sliding component 321 capable of moving on the guide rail 110 and a pair of supporting components 322a and 322b equipped on the sliding component 321.

The supporting component 322a on one side is equipped with the two blowers 331a and 332a with an up and down arrangement, so that the wind W generated by the two blowers 331a and 332a is provided to objects received in the cultivation racks 10 in a column on one side in the two columns. The supporting component 322b on the other side is equipped with the two blowers 331b and 332b with an up and down arrangement, so that the wind W generated by the two blowers 331b and 332b is provided to objects received in the cultivation racks 10 in a column on the other side in the two columns. The structures of the four blowers 331a, 332a, 331b and 332b are the same as the structures of the blowers 131 and 132 of the wind power device 100 in embodiment 1.

In addition, the cultivation racks 10 used in this growing system 1300 are also the same as the cultivation racks 10 used in the growing system 1100 in embodiment 1.

In the growing system 1300 provided with the wind power device 300 having such a structure in embodiment 3, if the cultivation racks 10 receiving a plurality of cultivation containers 1 in which the objects (e.g., seeds of plants and fruits) are sown are sequentially guided into a growing region (e.g., a workshop of a cultivation factory) Rp, the cultivation racks 10 are arranged in two columns to move on the rack movement path Pm.

In this growing system 1300, as shown in Fig. 9, the movement unit 320 of the wind power device 300 reciprocally moves between the columns of the pair of cultivation racks 10 arranged in two columns to move on the rack movement path Pm.

In the growing system 1300, the sliding component 321 is equipped with the pair of supporting components 322a and 322b, the supporting component 322a on one side is equipped with the blowers 331a and 332a providing wind W to the cultivation racks 10, in the column on one side, in the cultivation racks 10 arranged in two columns, and the supporting component 322b on the other side is equipped with the blowers 331b and 332b providing wind Wto the cultivation racks 10, in the column on the other side, in the cultivation racks 10 arranged in two columns.

Therefore, the movement unit 320 moves between the pair of columns of the cultivation racks 10 arranged in two columns to move on the rack movement path Pm, and thus, wind W may be provided to the objects received in the cultivation racks 10 located on two sides of the movement unit 320 at the same time.

Therefore, in the growing system 1300 in which the plurality of cultivation racks 10 are arranged in two columns to move on the rack movement path Pm, the wind power device 300 in embodiment 3 may also effectively provide wind W to the objects received in the cultivation racks 10.

In addition, in the wind power device 300 of embodiment 3, a device is shown in which the blower on one side providing wind to the cultivation racks in the column on one side in the pair of columns of cultivation racks arranged in two columns to move, and the blower on the other side providing wind to the cultivation racks in the column on the other side, move as a whole along the blower movement path Am. However, it is possible that the wind power device providing wind to the cultivation racks 10 in the both columns of the cultivation racks 10 arranged in two columns to move is a device in which the blower on one side providing wind to the cultivation racks in the column on one side, and the blower on the other side providing wind to the cultivation racks in the column on the other side, respectively move along the blower movement path Am independently, and in the variant of embodiment 3 described hereinafter, the wind power device having such a structure will be described.

### Variant of embodiment 3

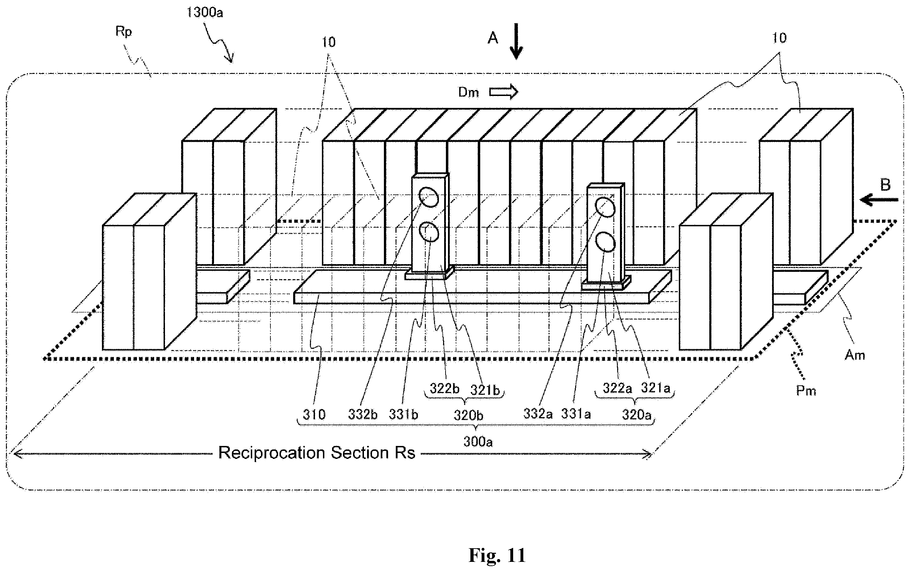

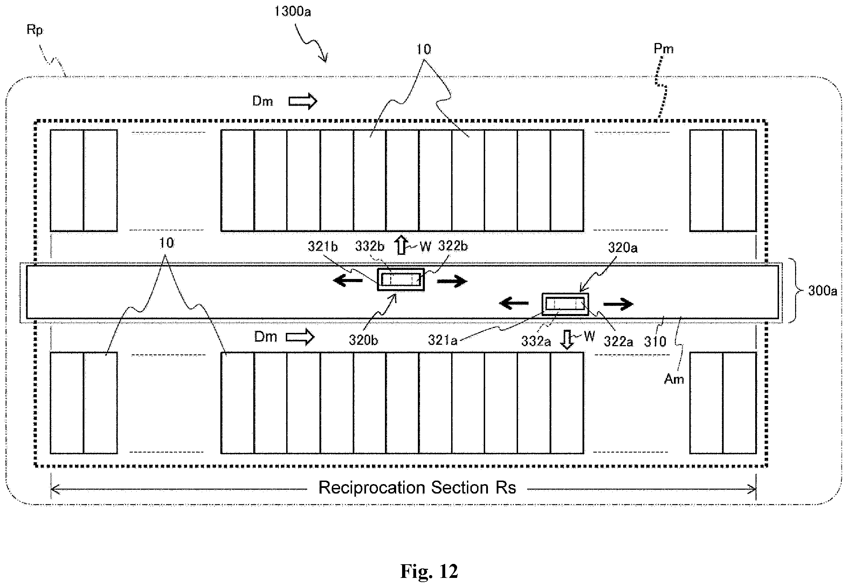

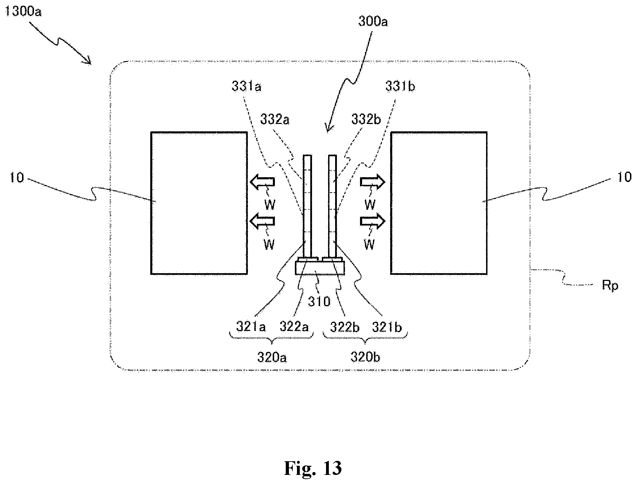

Fig. 11 to Fig. 13 are respectively used for illustrating a variant (wind power device 300a) of the wind power device 300 as shown in Fig. 8 and a variant (growing system 1300a) of the growing system 1300 as shown in Fig. 8. Fig. 11 shows the appearance of the growing system 1300a provided with the wind power device 300a, Fig. 12 shows a structure of the growing system 1300a observed in direction A in Fig. 11, and Fig. 13 shows a structure of the growing system 1300a observed in direction B in Fig. 11.

The wind power device 300a in the variant of embodiment 3 is configured to have two movement units 320a and 320b to replace the one movement unit 320 in the wind power device 300 in embodiment 3, wherein two of the four blowers and the other two blowers may move independently.

That is, as shown in Fig. 11 to Fig. 13, the wind power device 300a is provided with a guide rail 310 disposed along a blower movement path Am between a pair of columns of cultivation racks 10 arranged in two columns, two movement units 320a and 320b moving on the guide rail 310, two blowers 331a and 332a moving via the movement unit 320a on one side, and two blowers 331b and 332b moving via the movement unit 320b on the other side.

On the guide rail 310 of the wind power device 300, the two movement units 320a and 320b may be staggered away from each other, and both of the two movement units 320a and 320b may move from one end to the other end of the blower movement path Am.

The movement unit 320a on one side is provided with a sliding component 321a and a supporting component 322a equipped on the sliding component 321a, and the sliding component 321a is equipped on the guide rail 310 in a manner of approaching to the cultivation racks 10 in the column on one side in the pair of columns and moving on the guide rail 310 disposed between the pair of columns of the cultivation racks 10 arranged in two columns.

The supporting component 322a is fixed to the sliding component 321a, and the supporting component 322a is equipped with the two blowers 331a and 332a with an up and down arrangement, so that wind W is provided to objects received in the cultivation racks 10 in the column on one side in the pair of columns.

The movement unit 320b on the other side is provided with a sliding component 321b and a supporting component 322b equipped on the sliding component 321b, and the sliding component 321b is equipped on the guide rail 310 in a manner of approaching to the cultivation racks 10 in the column on the other side in the pair of columns and moving on the guide rail 310.

The supporting component 322b is fixed to the sliding component 321b, and the supporting component 322b is equipped with the two blowers 331b and 332b with an up and down arrangement, so that wind W is provided to objects received in the cultivation racks 10 in the column on the other side in the pair of columns.

Other structures of the wind power device 300a in the variant of embodiment 3 are the same as the structures of the wind power device 300 in embodiment 3.

In the growing system 1300a provided with the wind power device 300a having such a structure, as shown in Fig. 12, the two movement units 320a and 320b reciprocally move independently between the pair of columns of cultivation racks 10 arranged in two columns to move on the rack movement path Pm.

Further, the blowers 331a and 332a providing wind W to the cultivation racks 10, in the column on one side, in the cultivation racks 10 arranged in two columns are equipped on the supporting component 322a, fixed to the sliding component 321a, of the movement unit 320a on one side, and the blowers 331b and 332b providing wind W to the cultivation racks 10, in the column on the other side, in the cultivation racks 10 arranged in two columns are equipped on the supporting component 322b, fixed to the sliding component 321b, of the movement unit 320b on the other side.

Therefore, for the cultivation racks 10, arranged in two columns to move on the rack movement path Pm, in any column, wind W may be provided by the blowers 331a and 332a and the blowers 331b and 332b equipped on the respectively corresponding movement units 320a and 320b.

Therefore, similar to the wind power device 300 in embodiment 3, in the growing system 1300 configured in a manner that the plurality of cultivation racks 10 are arranged in two columns to move on the rack movement path Pm, the wind power device 300a in the variant of embodiment 3 may also effectively provide wind to the objects received in the cultivation racks 10.

Further, in the wind power device 300a in the variant of embodiment 3, the blower on one side providing wind to the cultivation racks in the column on one side in the cultivation racks 10 arranged in the two columns to move, and the blower on the other side providing wind to the cultivation racks in the column on the other side, move independently along the blower movement path Am. Therefore, in a case that the growth conditions of the objects in the cultivation racks in the column on one side and the cultivation racks in the column on the other side are different, the reciprocation periods of the blowers 331a and 332a on one side and the reciprocation periods of the blowers 331b and 332b on the other side may be adjusted independently, and air exchange matched with the growth conditions of the objects in the cultivation racks 10 in each column may be performed.

As mentioned above, the present invention is described by using the preferred embodiments of the present invention, which should not be explained as that the present invention is limited to the embodiments. It should be understood that the scope of the present invention should be only explained according to the scope of the claims. It should be understood that the skilled in the art may achieve an equivalent scope based on records and technical knowledge of the present invention and according to records of specific preferred embodiments of the present invention. It should be understood that the contents of literatures referenced in the present description should be the same as the contents specifically recorded in the present description to be used as references of the present description so as to be incorporated in the present description.

### Industrial applicability

The present invention is useful as a wind power device capable of effectively suppressing the generation of an imbalance between air and carbon dioxide in a plurality of cultivation portions arranged along a specified direction, and a growing system provided with such a wind power device.

### List of reference numerals in the drawings

10: cultivation portion (cultivation rack)
100, 100a, 200, 300, 300a: wind power device
120, 220a, 220b, 320, 320a, 320b: movement unit
131, 131a, 132, 132a, 133a, 134a, 231a, 231b, 232a, 232b, 331a, 331b, 332a, 332b: blower
1100, 1200, 1300, 1300a: growing system
Am: blower movement path
Dm: specified direction
Rs: reciprocation period
Rs1: first reciprocation section
Rs2: second reciprocation section

## Claims

1. A wind power device configured to provide wind to objects cultivated in a plurality of cultivation portions disposed along a specified direction, comprising:
a movement unit configured to be capable of reciprocally moving on a movement path along the specified direction and capable of adjusting the period of the reciprocal movement; and
at least one blower configured to move along with the movement unit.

2. The wind power device according to claim 1, wherein the movement path at least comprises a first second and a second section,
the at least one blower comprises at least one first blower reciprocally moving in the first section and at least one second blower reciprocally moving in the second section, and
the period of the reciprocal movement of the second blower is shorter than the period of the reciprocal movement of the first blower.

3. The wind power device according to claim 2, wherein the movement speed of the first blower is approximately equal to the movement speed of the second blower, and
the distance of the first section is longer than the distance of the second section.

4. The wind power device according to claim 2, wherein the distance of the first section is approximately equal to the distance of the second section, and
the movement speed of the second blower is higher than the movement speed of the first blower.

5. The wind power device according to any one of claims 1 to 4, wherein the plurality of cultivation portions are arranged in a pair of columns, and
the at least one blower is disposed between the pair of columns and comprises a blower on one side providing wind to the cultivation portions in the column on one side, and a blower on the other side providing wind to the cultivation portions in the column on the other side.

6. The wind power device according to claim 5, wherein the blower on one side and the blower on the other side integrally move along with the movement unit.

7. The wind power device according to claim 5, wherein the movement unit is provided with a movement unit on one side and a movement unit on the other side,
the blower on one side moves along with the movement unit on one side, and
the blower on the other side moves along with the movement unit on the other side.

8. The wind power device according to claim 7, wherein the movement unit on one side and the movement unit on the other side move separately.

9. The wind power device according to any one of claims 1 to 8, wherein each of the cultivation portions is provided with a movable cultivation rack, and the cultivation rack is provided with a plurality of cultivation shelves along the vertical direction.

10. The wind power device according to claim 9, wherein a plurality of blowers are disposed in the vertical direction in a manner of one-to-one correspondence to the cultivation shelves.

11. A growing system, comprising:
a plurality of cultivation portions disposed along a specified direction; and
the wind power device according to any one of claims 1 to 10.

12. The growing system of claim 11, wherein each of the cultivation portions is provided with a movable cultivation rack, and the cultivation rack is provided with a rack movement unit moving in the specified direction on the basis of cultivation states of cultivated objects.
